# EUROPÄISCHE PATENTANMELDUNG

(11) **EP 1 738 641 A1**
(43) Veröffentlichungstag der Anmeldung: **03.01.2007**
(21) Anmeldenummer: 06405179.0
(22) Anmeldetag: 26.04.2006
(51) Int. Cl.: A01K 13/00, A01L 3/00

(54) **Pferdeschuh**

(30) Priorität: 28.06.2005 CH 10882005
(71) Anmelder: Rohner, Hubert, 7012 Felsberg (CH)
(72) Erfinder: Rohner, Hubert, 7012 Felsberg (CH)
(74) Vertreter: Riederer, Conrad A.

(57) **Zusammenfassung**

Der Pferdeschuh besitzt einen Verschluss (20), der hinten die beiden Seitenteile (23, 25) miteinander verbindet. Dieser Verschluss ist durch ein Band (21) mit Schnalle (29) gebildet. Von der Mitte der Rückwand (33) des Schafts (19) erstreckt sich eine Schlaufe (31) nach oben, welche das Band (21) umfasst. Diese Schlaufe (31) ist verstellbar, so dass das Band (21) so eingestellt werden kann, dass es die Ballen (15) des Fusses nicht berührt. Droht aber z.Bsp. beim Galopp des Pferdes der Pferdeschuh sich vom Huf zu lösen, wird dies durch das Band (21) verhindert.

## Beschreibung

Die Erfindung betrifft einen Pferdeschuh mit Sohle und Schaft und einer Verschlussvorrichtung mit einem Verschluss, welcher sich hinten von einer Seitenwand zur andern Seitenwand des Schafts erstreckt.

Die CH 670033 beschreibt einen Pferdeschuh dieser Art bei dem der Verschluss derart angeordnet ist, dass er im montierten Zustand an der Rückseite des Fusses des Pferdes in der Fesselbeuge angreift. Diese Art von Pferdeschuh hat sich über die letzten zwanzig Jahre gut bewährt und eine weite Verbreitung gefunden. Es hat sich aber gezeigt, dass bei unsachgemässer Befestigung des Pferdeschuhs dessen Verträglichkeit für das Pferd beeinträchtigt wird. Es sollte nämlich immer darauf geachtet werden, dass das als Verschluss dienende Band nicht straff am Fuss anliegt. Wenn aber nach unsachgemässer Befestigung des Schuhs das Band straff anliegt, entstehen für das Pferd störende Irritationen.

Die CH 680181 beschreibt einen Pferdeschuh, bei welchem der Verschluss auf dem hinteren Kronenwulst aufliegt. Auch hier besteht die Gefahr, dass zu stark angezogen wird und der Verschluss auf die Ballen des Fusses drückt.

Es ist daher Aufgabe der vorliegenden Erfindung, eine Lösung zu finden, welche eine unsachgemässe Befestigung des Pferdeschuhs verhindert.

Diese Aufgabe wird erfindungsgemäss erreicht durch einen Pferdeschuh der eingangs erwähnten Gattung, welcher gekennzeichnet ist durch eine sich von der Mitte der Rückwand des Schafts nach oben erstreckende Rückhaltevorrichtung für den Verschluss.

Beim Anpassen des Pferdeschuhs an den Huf wird die Rückhaltevorrichtung so eingestellt, dass der Verschluss beim Schliessen kurz über den Ballen des Fusses verläuft.

Dadurch wird sichergestellt, dass der Pferdeschuh unter keinen Umständen vom Huf rutschen kann, wenn beispielsweise beim Galopp hohe Beschleunigungskräfte auftreten.

Als Verschluss dient vorteilhaft ein Band mit Schnalle. Es sind aber auch andere Ausgestaltungen möglich, z.Bsp. ein Kabel mit Schnalle. Vorteilhaft ist das Band durch je eine Öffnung in den Seitenwänden geführt. Dadurch wird das Band stabil in der gewünschten Lage gehalten.

Die Rückhaltevorrichtung, die vorteilhaft als Bandschlaufe ausgebildet ist, ist zweckmässigerweise zur Anpassung des Pferdeschuhs an den Huf verstellbar. Die Bandschlaufe kann durch Schraube und Mutter lösbar an der Rückwand des Schafts befestigt sein. Um eine Verstellung zu ermöglichen, kann das Band der Bandschlaufe im Bereich der Enden mehrere Löcher aufweisen. Dies ermöglicht eine einfache Anpassung des Pferdeschuhs an den Huf. Um Irritationen des Fusses zu vermeiden, kann das Band auf beiden Seiten der Rückhaltevorrichtung von einer Umhüllung, z.Bsp. aus Kunststoff, umgeben sein.

Um das Einführen des Hufs in den Pferdeschuh zu erleichtern, kann die Vorderwand des Schafts eine relativ geringe Höhe aufweisen oder einen von oben nach unten verlaufenden Schlitz besitzen. In diesem Fall ist es zweckmässig, auch vorn einen Verschluss vorzusehen, damit die Gefahr eines Herausschlüpfen des Hufs vermieden wird. Als Verschluss kann ein Band mit Schnalle dienen.

Ein Ausführungsbeispiel der Erfindung wird nun unter Bezugnahme auf die Zeichnung beschrieben. Es zeigt:
- Fig.1: eine perspektivische Ansicht des Pferdeschuhs am Huf eines Pferdes,
- Fig. 2: eine perspektivische Ansicht des Pferdeschuhs wie in Figur 1,
- Fig. 3: eine perspektivische Ansicht des Pferdeschuhs von vorn,
- Fig. 4: das Band der Rückhaltevorrichtung

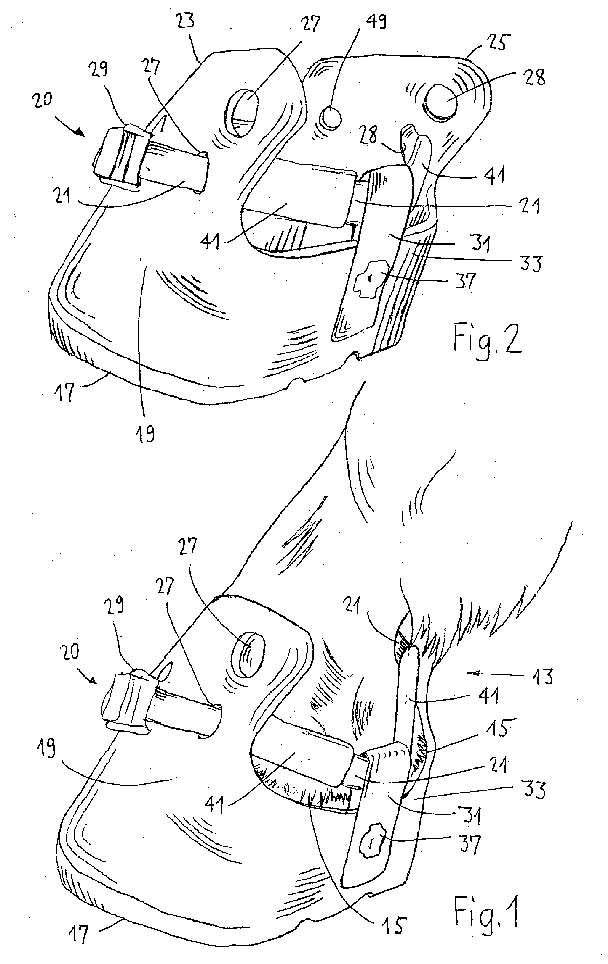

In Figur 1 sind die Fessel 13 und die paarigen Ballen 15 des Pferdes sichtbar.

Die Formgebung des Pferdeschuhs kann im wesentlichen die gleiche sein wie sie in der CH 670033 beschrieben ist.

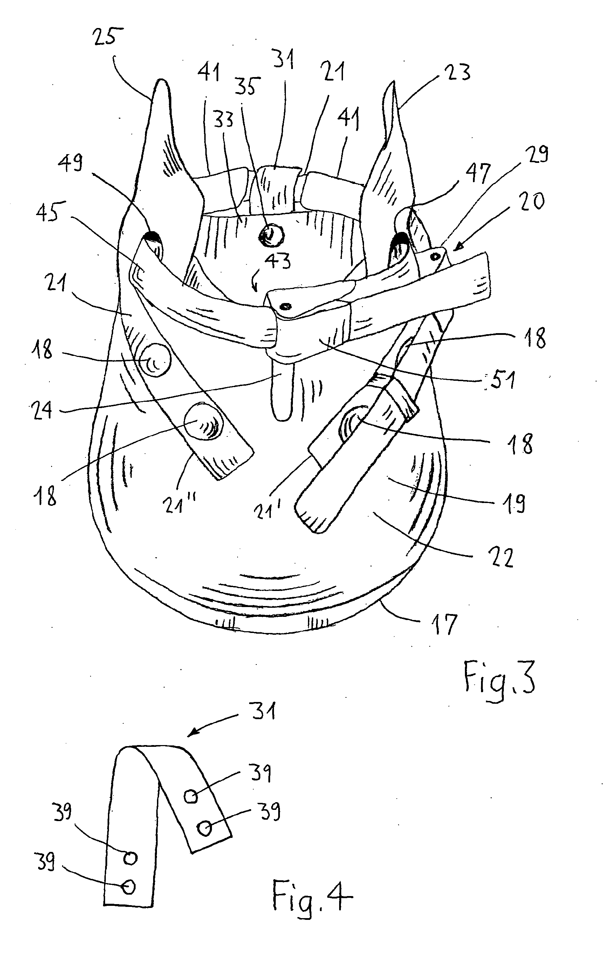

Der Pferdeschuh gemäss den Figuren 1 bis 3 besteht im wesentlichen aus der Sohle 17 und dem Schaft 19. Bewährt hat sich eine einstückige Ausbildung aus thermoplastischem Kunststoff. Wie Figur 3 zeigt, kann die Vorderwand 22 des Schafts 19 eine relativ geringe Höhe und/ oder etwa in der Mitte einen von oben nach unten verlaufenden Schlitz 24 aufweisen, welcher das Einführen des Hufs in den Pferdeschuh erleichtert. Je geringer die Höhe der Vorderwand 22 ist oder je weiter sich der Schlitz 24 nach unten erstreckt, desto besser lässt sich der Huf in den Pferdeschuh einführen. Damit wächst aber auch die Gefahr, dass beim Auftreten grosser Fliekräfte der Huf vom aus dem Pferdeschuh schlüpft, wenn nicht, wie später beschrieben, besondere Vorkehrungen getroffen werden. Die Seitenwände 23, 25 erstrecken sich weiter nach oben als die Vorderwand 22 und die Rückwand 33.

Als Verschluss 20 des Pferdeschuhs dient ein Band 21, das sich hinten von einer Seitenwand 23 zur andern Seitenwand 25 erstreckt. Das Band 21 ist dabei durch Öffnungen 27, 28 (Fig. 2) in den Seitenwänden 23, 25 hindurchgeführt, welche die Lage des Bandes 21 festlegen. Beim gezeigten Ausführungsbeispiel weist das Band 21 zwei Bandhälften 21', 21" (Fig. 3) auf, die mit Nieten 18 am Schaft 19 befestigt sind. Eine Schnalle 29 dient der Verbindung der beiden Bandhälften. Nach dem Anziehen des Schuhs auf den Huf des Pferdes kann das Band 21 gespannt und die Schnalle 29 geschlossen werden.

Eine Rückhaltevorrichtung 31, welche die Form einer Bandschlaufe (Fig. 4) besitzt, durch welche das Band 21 hindurchgeführt ist, erstreckt sich von der Mitte der Rückwand 33 des Schafts 19 nach oben. Die Bandschlaufe 31 ist mit Schraube 35 (Fig. 3) und Mutter 37 an der Rückwand 33 befestigt. Wie Fig. 4 zeigt, dienen der Höhenverstellung Löcher 39. Die als Rückhaltevorrichtung dienende Bandschlaufe 31 verhindert nach dem Anziehen des Bandes 21, dass dieses auf die Ballen 15 drückt. Nun kann es aber z.Bsp. beim Galopp vorkommen, dass die dabei auftretenden Fliehkräfte bestrebt sind, den Pferdeschuh vom Huf zu lösen, sodass die Ballen 15 des Pferdes in Kontakt mit dem Band 21 kommen. Um die Ballen zu schonen sind deshalb auf beiden Seiten der Rückhaltevorrichtung 31 rohrförmige Umhüllungen 41 des Bandes 21 vorgesehen. Diese Umhüllungen 41 bestehen vorteilhaft aus einem weichen Kunststoff.

Wie Figur 3 zeigt, kann die Verschlussvorrichtung einen weiteren Verschluss 43 aufweisen, welcher sich vorn von einer Seitenwand 23 zur anderen Seitenwand 25 erstreckt. Ein Verschluss 43 ist aber nur dann erforderlich, wenn die Vorderwand 22 nicht hoch ist oder wenn der Schlitz 24 in der Vorderwand 22 weit nach unten gezogen ist und somit die Gefahr besteht, dass z.Bsp. beim Galopp des Pferdes der Pferdeschuh vom Huf des Pferdes schlüpft. Beim gezeigten Ausführungsbeispiel wird der Verschluss 43 durch ein Band 45 gebildet, das sich durch Öffnungen 47,49 erstreckt. Der Fixierung des Bandes 45 dient eine Schnalle 51.

### Zusammenfassend kann folgendes festgehalten werden:

Der Pferdeschuh besitzt einen Verschluss 20, der die beiden Seitenteile 23, 25 miteinander verbindet. Dieser Verschluss ist durch ein Band 21 mit Schnalle 29 gebildet. Von der Mitte der Rückwand 33 des Schafts 19 erstreckt sich eine Schlaufe 31 nach oben, welche das Band 21 umfasst. Diese Schlaufe 31 ist verstellbar, so dass das Band 21 so eingestellt werden kann, dass es die Ballen 15 des Fusses nicht berührt. Droht aber z.Bsp. beim Galopp des Pferdes der Pferdeschuh sich vom Huf zu lösen, wird dies durch das Band 21 verhindert.

## Patentansprüche

1. Pferdeschuh mit Sohle (17) und Schaft (19) und einer Verschlussvorrichtung mit einem Verschluss (20), welcher sich hinten von einer Seitenwand (23) zur andern Seitenwand (25) des Schafts erstreckt, **gekennzeichnet durch** eine sich von der Mitte der Rückwand (33) des Schafts (19) nach oben erstreckende Rückhaltevorrichtung (31) für den Verschluss (20).

2. Pferdeschuh nach Anspruch 1, **dadurch gekennzeichnet, dass** der Verschluss (20) ein Band (21) mit Schnalle (29) ist.

3. Pferdeschuh nach Anspruch 1 oder 2, **dadurch gekennzeichnet, dass** das Band (21) durch je ein Öffnung (27, 28) in den Seitenwänden (23, 25) geführt ist.

4. Pferdeschuh nach einem der Ansprüche 1 bis 3, **dadurch gekennzeichnet, dass** die Rückhaltevorrichtung (31) verstellbar ist.

5. Pferdeschuh nach einem der Ansprüche 1 bis 4, **dadurch gekennzeichnet, dass** die Rückhaltevorrichtung (31) eine Bandschlaufe ist.

6. Pferdeschuh nach Anspruch 5, **dadurch gekennzeichnet, dass** die Bandschlaufe (31) durch Schraube (35) und Mutter (37) lösbar an der Rückwand (33) des Schafts (19) befestigt ist.

7. Pferdeschuh nach einem der Ansprüche 5 bis 6, **dadurch gekennzeichnet, dass** das Band der Bandschlaufe (31) im Bereich der Enden mehrere Löcher (39) aufweist.

8. Pferdeschuh nach einem der Ansprüche 2 bis 7, **dadurch gekennzeichnet, dass** das Band (21) des Verschlusses (20) auf beiden Seiten der Rückhaltevorrichtung (31) von einer Umhüllung (41), z.Bsp. aus Kunststoff, umgeben ist.

9. Pferdeschuh nach einem der Ansprüche 1 bis 8, **dadurch gekennzeichnet, dass** die Vorderwand (22) des Schafts (19) eine relativ geringe Höhe aufweist oder einen sich von oben nach unten verlaufenden Schlitz (24) besitzt und dass auch vorn ein Verschluss (43) vorgesehen ist.

10. Pferdeschuh nach Anspruch 9, **dadurch gekennzeichnet, dass** sich der Verschluss (43) in Form eines Bandes (45) mit Schnalle (51) von einer Seitenwand (23) zur anderen Seitenwand (25) erstreckt.

11. Pferdeschuh nach Anspruch 10, **dadurch gekennzeichnet, dass** sich das Band (45) durch Öffnungen (47, 49) in den Seitenwänden (23, 25) des Schafts (19) erstreckt.
